# EUROPÄISCHE PATENTSCHRIFT

(11) **EP 0 664 390 B1**
(45) Veröffentlichungstag und Bekanntmachung des Hinweises auf die Patenterteilung: **26.03.1997**
(21) Anmeldenummer: 94114588.0
(22) Anmeldetag: 16.09.1994
(51) Int. Cl.: F02M 35/10

(54) **Integriertes Ansaugsystem**
Integral suction system
Système d'aspiration intégré

(30) Priorität: 25.01.1994 DE 4402048
(43) Veröffentlichungstag der Anmeldung: 26.07.1995
(73) Patentinhaber: FILTERWERK MANN & HUMMEL GMBH, D-71631 Ludwigsburg (DE)
(72) Erfinder: Kopec, Eduard, D-74321 Bietigheim-Bissingen (DE)
(74) Vertreter: Voth, Gerhard, Dipl.-Ing.

(56) Entgegenhaltungen:
- EP-A- 0 365 016
- EP-A- 0 523 027
- WO-A-90/09520
- DE-A- 3 606 300
- FR-A- 2 690 376
- REVUE TECHNIQUE AUTOMOBILE Bd. 48, Nr. 555, 01 Oktober 1993, BOUL.BILLANCOURT, Seite LX, XP000411585 'EQUIPEMENTS DE VEHICULES'

## Beschreibung

Die Erfindung betrifft ein integriertes Ansaugsystem nach dem Oberbegriff des Hauptanspruchs.

Es ist bekannt, insbesondere für die Konditionierung der Ansaugluft von Brennkraftmaschinen, Ansaugsysteme komplett mit allen wichtigen Komponenten vom Luftfilter bis zum Einspritzventil herzustellen. Solche Ansaugsysteme beinhalten eine Vielzahl von Komponenten, wie zum Beispiel Ansaugrohr, Drosselklappe, Leerlaufsteller, Kraftstoffverteilung, Einspritzventile, Temperatursensor usw.

So ist beispielsweise von der Firma Siemens AG ein System bekannt, bei dem an einem Kunststoffträger die unterschiedlichen Komponenten angeflanscht bzw. angeordnet sind. Der Kunststoffträger ist als Ansaugrohr gestaltet.

Ein Nachteil dieses bekannten Systems ist darin zu sehen, daß zwar die Vielzahl der Komponenten an einem System vereint sind. Dieses System ist jedoch gerade durch die Vielzahl der Komponenten sehr komplex und aufwendig herzustellen. Außerdem muß es mit einer großen Zahl von Anschlußelementen sowohl mechanischer als auch elektrischer Art versehen werden muß.

Es ist weiterhin bekannt, Kunststoffansaugrohre im sogenannten Kernschmelzverfahren herzustellen.

Kennzeichnend für die Kernschmelztechnik ist das Umspritzen eines Metallkerns, dessen Schmelzpunkt unterhalb des Kunststoffs liegt.

Durch das Ausschmelzen des Kerns ist das Saugrohr mit weitgehend freier Formgebung bei hoher Maßhaltigkeit und guter Oberflächenabbildung aus einem Guß herstellbar.

Eine Integration von zusätzlichen Bauteilen oder mechanischen bzw. elektrischen Komponenten ist beim Kernschmelzverfahren nicht oder nur mit hohem Aufwand möglich.

Aus der FR-A-2 690 376 ist ein Ansaugrohr bekannt, welches in Zweischalentechnik aufgebaut ist. Die beiden Schalen sind dadurch miteinander verbunden, daß sie in einem zusätzlichen Arbeitsgang an ihren Verbindungsstellen mit Kunststoff umspritzt werden. Dieses Verfahren ist sehr aufwendig und erfordert zum Verbinden der beiden Teile einen zusätzlichen Arbeitsgang. Außerdem ist durch die Verbindungstechnik keine zuverlässige Abdichtung zwischen den beiden Teilen - dies hat die Praxis gezeigt - gewährleistet.

Es ist weiterhin aus der Revue Technique Automobile, Band 48, Nr. 555, Seite LX, ein Ansaugsystem bekannt. Dieses besteht aus einer Vielzahl von Elementen, bei dem - ähnlich dem System der Firma Siemens AG - an einem Kunststoffträger die unterschiedlichen Bauteile angeflanscht bzw. angeordnet sind. Auch hier ist der Kunststoffträger als Ansaugrohr gestaltet.

Der Nachteil dieses Systems besteht in der offenen Anwendung einer Vielzahl von Bauteilen, die damit einer erhöhten Verschmutzungsgefahr unterliegen.

Der Erfindung liegt die Aufgabe zugrunde ein Ansaugsystem insbesondere für Verbrennungsluft einer Brennkraftmaschine zu schaffen, welches einfach herstellbar ist und eine Vielzahl von Komponenten beinhaltet.

Diese Aufgabe wird ausgehend von dem Oberbegriff des Hauptanspruchs durch dessen kennzeichnenden Merkmale gelöst.

Wesentlicher Vorteil der Erfindung ist die Anwendung der Mehrschalentechnik. Bei dieser werden mehrere Einzelteile gespritzt, welche durch eine Schweißung miteinander verbunden das fertige Produkt ergeben.

Bei dem Ansaugsystem besteht das Produkt aus einem Unter- und einem Oberteil, wobei die Trennebene zwischen Unter- und Oberteil entlang der Ansaugrohre verläuft. Dadurch lassen sich auch komplizierte Strukturen spritzgießtechnisch einfach herstellen und - dies ist der entscheidende Vorteil der Erfindung - bei der Montage bzw. bei dem Zusammenfügen der einzelnen Teile bzw. Schalen mechanische oder elektrische bzw. elektronische Komponenten einfügen.

Eine Ausgestaltung der Erfindung sieht vor, das Oberteil des Gehäuses mit einem weiteren Zwischengehäuse zu versehen, wobei die Verbindung dieser beiden Teile durch Schweißung erfolgt. Als Schweißverbindungsverfahren hat sich Vibrationsschweißen bewährt. Durch die Anordnung eines Zwischengehäuses können luftführende Kanäle gebildet oder weitere Komponenten mit dem Ansaugsystem verknüpft werden.

Gemäß einer weiteren Ausgestaltung der Erfindung ist im Unterteil des Gehäuses ein Ölabscheider für die Kurbelgehäuseentlüftung integriert. War es bislang üblich, einen Ölabscheider als getrenntes Kunststoffbauteil am Motor anzuordnen, so besteht nunmehr die Möglichkeit, diesen in das Kunststoffgehäuse einzuschließen.

In einfacher Weise ist gemäß einer Weiterbildung der Erfindung die Ausgestaltung eines Resonanzsystems in dem Ansaugsystem möglich. Dazu sind zwei Luftführungssysteme erforderlich, die mit einer Resonanzklappe verbunden oder getrennt werden können.

Ebenso lassen sich mit dem erfindungsgemäßen Ansaugsystem Schaltsaugrohre herstellen, indem die Saugrohrlängen durch entsprechende Klappen oder Ventile an die Drehzahl des Motors angepasst werden.

Die Kunststofftechnik des Ansaugsystems läßt in Verbindung mit Klappen in den luftführenden Teilen eine einfache Systemoptimierung zu.

So kann zum Beispiel beim 6-Zylinder-Motor durch die Resonanzklappe im unteren Drehzahlbereich die Zylinderreihe geteilt werden, wodurch zwei getrennt ansaugende 3-Zylinder geschaffen werden, welche besonders in dem unteren Drehzahlbereich ein günstigeres Drehmomentverhalten aufweisen. Im hohen Drehzahlbereich öffnet die Resonanzklappe und ermöglicht die optimale Ausnutzung der Leistung des 6-Zylinder-Motors.

Eine weitere Optimierung des Drehmomentsverhaltens läßt sich durch eine Ausgestaltung des Ansaugsystems mit einem Turbulenzsystems erzielen. Dieses Turbulenzsystems besteht aus einem selbstständigen Turbulenzsammler und selbstständigen Turbulenzkanälen. Diese verlaufen parallel zu den Ansaugkanälen und sind wie diese aus Ober- und Unterschale des Gehäuses gebildet. Das Turbulenzsystem wird bei geringen Drehzahlen des Motors wirksam, das heißt, in diesem Drehzahlbereich wird die Ansaugluft des Motors ausschließlich über das Turbulenzsystem zugeführt, welches aufgrund kleinerer Querschnitte zu einer besseren Verwirbelung der Ansaugluft und damit zu einer besseren Gemischbildung führt.

Eine Bestückung des Ansaugsystems läßt sich gemäß einer weiteren Ausgestaltung der Erfindung mit einer Vielzaht von Komponenten, wie zum Beispiel einem Heißfilmluftmassenmesser, Einspritzventilen sowie Kraftstoffleiste vornehmen. Ebenso kann die Drosselklappe im System integriert sein. Die Systemintegration hat den Vorteil, daß sämtliche Anschlußleitungen und zwar sowohl die elektrischen als auch die Anschlußleitungen für Kraftstoff jeweils mit einem einzigen Steckkontakt bzw. einer Steckverbindung mit den peripheren Motorkomponenten verbindbar ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in der Zeichnung dargestellt und wird im folgenden näher erläutert. Die Zeichnungen zeigen:
- Fig. 1: ein integriertes Ansaugsystem,
- Fig. 2: eine Schnittdarstelung des Ansaugsystems,
- Fig. 3: eine schematische Darstellung des Ansaugsystems.

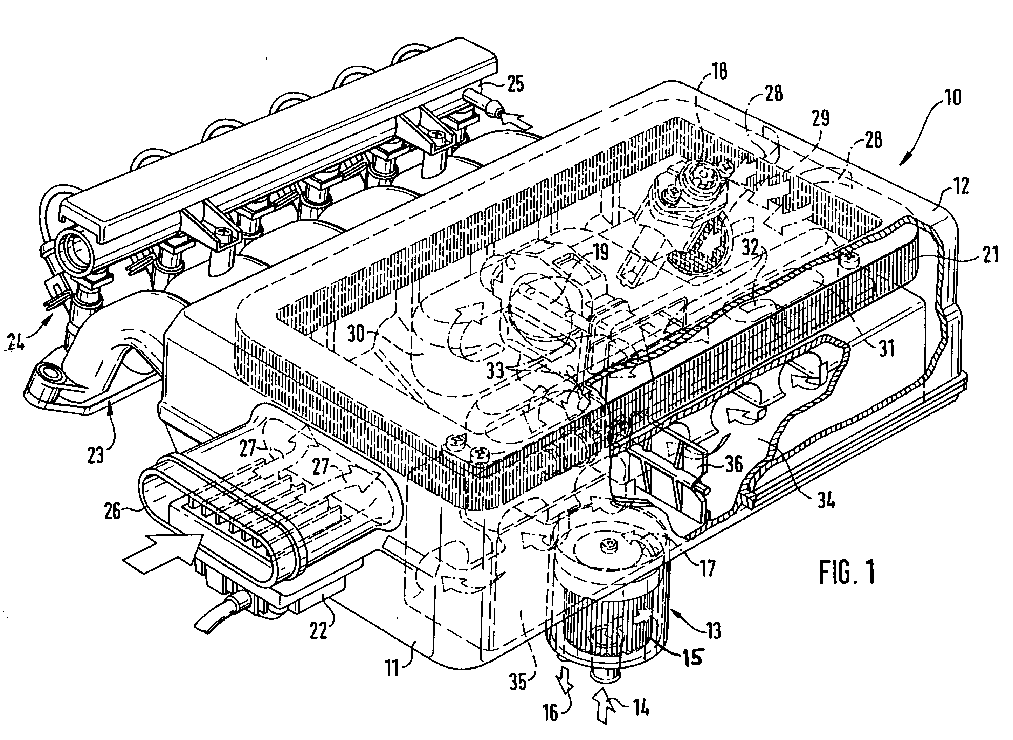

Das in Figur 1 gezeigte integrierte Ansaugsystem beinhaltet von der Zuführung der Ansaugluft bis hin zu den Einlaßventilen der Brennkraftmaschine sämtliche Komponenten, die zur Aufbereitung und Konditionierung des Kraftstoffgemisches erforderlich sind. Das Ansaugsystem besteht aus einem Gehäuse 10, welches ein Grundkörper 11 aufweist, auf dem ein Deckel 12 lösbar befestigt ist. Innerhalb des Gehäuses sind folgende Komponenten enthalten; Ein ölabscheider 13, welchem gemäß Pfeil 14 die Durchblasgase der Brennkraftmaschine zugeführt werden. Die Durchblasgase werden in dem ölabscheider 13 mittels eines Filterelements 15 gereinigt. Das Öl fließt in Richtung des Pfeiles 16 in die ölwanne zurück, während die gereinigten Gase gemäß Pfeil 17 mit der Ansaugluft vermischt werden.

Es ist ferner ein Luftmassenmesser 18 vorgesehen, sowie eine Drosselvorrichtung 19. Weiterhin ist eine Resonanzklappe 36 in dem Grundkörper 11 sowie ein Filterelement 21 in Form eines Rechteckfilters angeordnet. An dem Grundkörper befindet sich eine elektrische Anschlußleiste 22 mit welcher die einzelnen Komponenten angesteuert werden und über die Sonsorsignale abgegriffen werden können. An den Grundkörper schließen sich die Saugrohre 23 an. Diese Saugrohre sind mit den Einspritzventilen 24 bestückt. Die Versorgung der Einspritzventile 24 erfolgt über eine Kraftstoffverteilleiste 25. Die Ansaugluft strömt über den Ansaugstutzen 26 in das Gehäuse gemäß den Pfeilen 27 ein, gelangt dort in den Rohluftraum und durchströmt das Filterelement 21 gemäß den Pfeilen 28. Die gereinigte Luft strömt durch ein Sieb 29 und gelangt über den Luftmassenmesser 18 zu der Drosselvorrichtung 19. Bei geöffneter Drosselklappe strömt die Luft durch den Luftführungskanal 30 und gelangt von dort aus in den Querverteiler 31. Gemäß den Pfeilen 32 und 33 strömt die Luft in die beiden Resonanzkammern 34, 35. Die Resonanzkammern sind über die Resonanzklappe 36 getrennt. Die Resonanzklappe wird bei hohen Drehzahlen geöffnet und verbindet beide Kammern zur Verbesserung des Drehmomentverhaltens. Ausgehend von den Resonanzkammern 34, 35 strömt die Luft durch die Saugrohre 23 zu den hier nicht dargestellten Einlaßventilen des Motors.

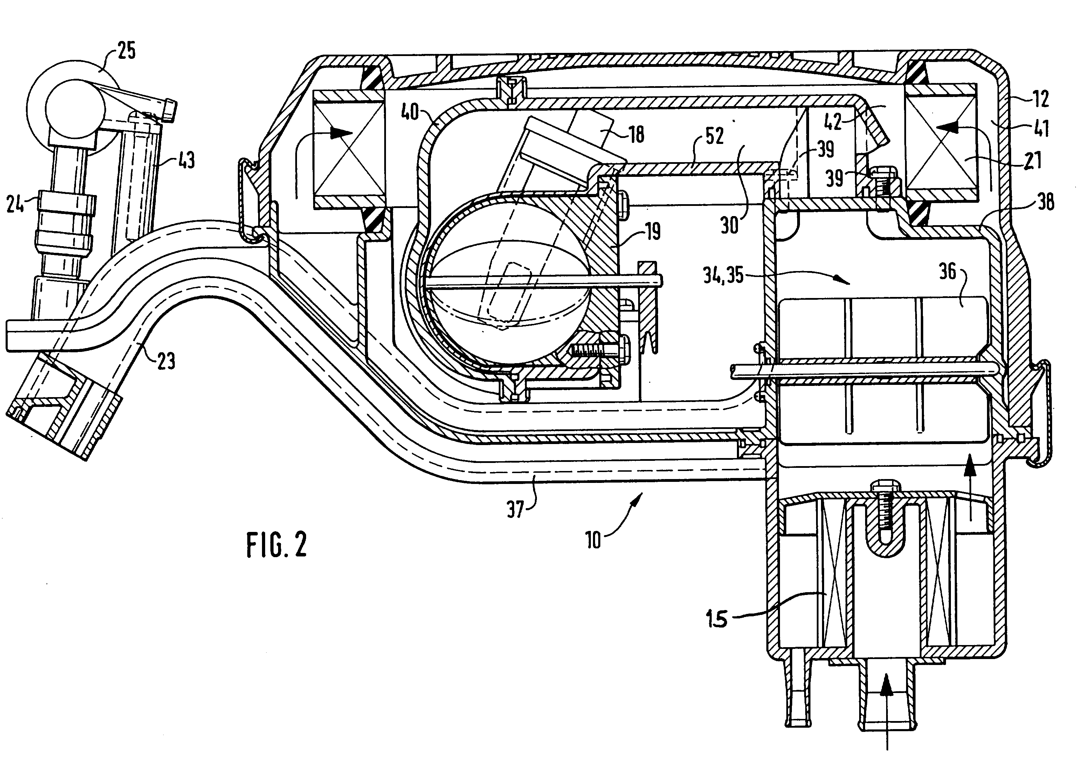

Der Aufbau des Gehäuses ist gemäß Figur 2 in einer Schnittdarstellung gezeigt. Der Grundkörper des Gehäuses 10 besteht aus einem Unterteil 37, welches auch die untere Halbschale der Saugrohre 23 bildet. Dieses Unterteil ist mit einem Oberteil 38 verschweißt. Das Oberteil 38 bildet die oberen Halbschalen der Saugrohre 23 und die Resonanzkammern 34, 35. In den Resonanzkammern ist wie dargestellt, die Resonanzklappe 36 angeordnet, welche über ein hier nicht gezeigten Stellmechanismus um 90° geschwenkt werden kann. An dem Oberteil ist der Luftführungskanal 30 mittels einer Schraubverbindung befestigt. Der Luftführungskanal 30 ist mit einer Abdeckung 40 versehen. Diese ist zweckmäßigerweise mittels einer Schweißverbindung an dem Kanal 30 fixiert. In den Luftführungskanal ist die Drosselvorrichtung 19 integriert sowie der hier nur schematisch angedeutete Luftmassenmesser 18. Das Filterelement 21 befindet sich zwischen dem Deckel 12 und dem Oberteil 38 des Gehäuses und dichtet den Rohluftraum 41 gegenüber dem Reinluftraum 42 filterwirkend ab. An den Saugrohren 23 sind Befestigungselemente 43 angeordnet. Diese Befestigungselemente 43 tragen die Kraftstoffverteilleiste 25, welche die Einspritzventile 24 mit Kraftstoff versorgen.

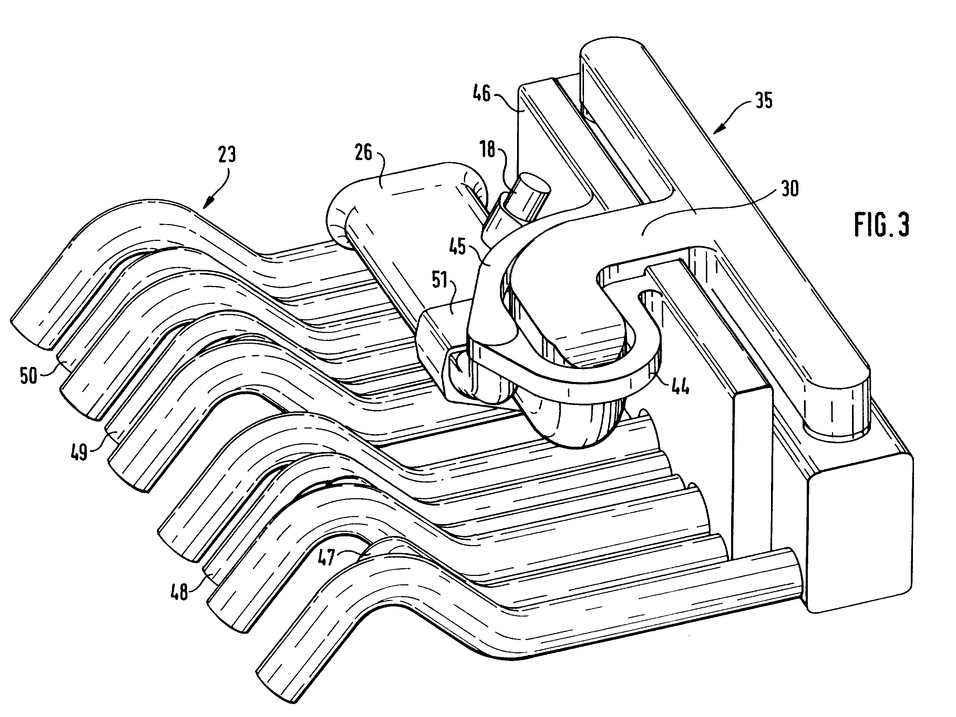

Figur 3 zeigt eine schematische Darstellung des Ansaugsystems mit einem integrierten Turbulenzsystem. Insbesondere bei niederen Drehzahlen der Brennkraftmaschine ist es erforderlich zur Optimierung des Verbrennungsprozesses die zugeführte Ansaugluft mit dem Kraftstoff ausreichend zu verwirbeln. Dies geschieht am besten durch hohe Luftgeschwindigkeiten. Um diese hohen Luftgeschwindigkeiten zu erreichen kann ein sogenanntes Turbulenzsystem in das Ansaugsystem integriert sein. Dieses ist im Grunde ein verkleinertes Ansaugsystem welches von der Funktionsweise her dem Ansaugsystem entspricht, jedoch durch die kleineren Kanalquerschnitte höhere Luftgeschwindigkeiten erzeugt. In Figur 3 ist der Ansaugstutzen 26 mit dem Luftmassenmesser 18 sowie dem Luftführungskanal 30 dargestellt, welchem die beiden Resonanzkammern 34, 35 und die Saugrohre 23 nachgeschaltet sind.

Von dem Ansaugstutzen wird die benötigte Luft über Luftführungskanäle 44, 45 zu einem Turbulenzsammler 46 geführt. Aus diesem Turbulenzsammler 46 zweigen sechs Turbulenzkanäle (sichtbar sind die Kanäle 47, 48, 49 50) ab. Diese Turbulenzkanäle verlaufen parallel zu den Saugrohren 23 und münden im Bereich der Einlaßventile in den Ansaugtrakt des Zylinderkopfes der Brennkraftmaschine. Bei diesem System ist die hier nicht sichtbare Drosselklappe als Registerdrosselklappe 51 ausgestaltet, welche bei niederen Drehzahlen zunächst das Turbulenzsystem freigibt und erst ab höheren Drehzahlen das Hauptsystem öffnet. Selbstverständlich sind auch die Turbulenzkanäle in Zwei-Schalen-Technik aufgebaut. Das heißt die untere Halbschale der Turbulenzkanäle schließt sich an die untere Halbschale der Saugrohre an, während die obere Halbschale sich an die obere Halbschale der Saugrohre anschließt und eine gemeinsame Verschweißung der Halbschalen erfolgt.

## Patentansprüche

1. Integriertes Ansaugsystem insbesondere für die Verbrennungsluft einer Brennkraftmaschine bestehend aus einem Kunststoffgehäuse (10), Ansaugrohre (23), einem Luftfilter (21) und elektrischen und/oder mechanischen Komponenten (18,51), dadurch gekennzeichnet, daß das Gehäuse (10) in Mehrschalentechnik aufgebaut ist und aus wenigstens einem Ober- und einem Unterteil (38, 37) besteht, wobei die Trennebene zwischen Ober- und Unterteil (38, 37) entlang der Ansaugrohre (23) verläuft und wobei ein Deckel (12) auf dem Oberteil (38) den Luftfilter (21), der zwischen Deckel (12) und Oberteil (38) angeordnet ist, fixiert und den rohluftseitigen Luftraum verschließt.

2. Integriertes Ansaugsystem nach Anspruch 1, dadurch gekennzeichnet, daß mit dem Oberteil (38) des Gehäuses ein weiteres Zwischengehäuse (52) in Zweischalentechnik-Verbundsystem angeordnet ist und einen Teil der luftführenden Kanäle bildet.

3. Integriertes Ansaugsystem nach einem der vorherigen Ansprüche, dadurch gekennzeichnet, daß im Unterteil (37) des Gehäuses ein ölabscheider (13) für die Kurbelgehäuseentlüftung integriert ist.

4. Integriertes Ansaugsystem nach einem der vorherigen Ansprüche, dadurch gekennzeichnet, in dem Gehäuse (10) ein Resonanzsystem angeordnet ist, bestehend aus einer Resonanzklappe (36) und zwei Luftführungssysteme (34, 35) wobei die Resonanzklappe (36) die beiden Luftführungssysteme (34, 35) verbindet.

5. Integriertes Ansaugsystem nach einem der vorherigen Ansprüche, dadurch gekennzeichnet, daß ein Turbulenzsystem vorgesehen ist, bestehend aus einem Turbulenzsammler (46) und zu den jeweiligen Einlaßventilen der Verbrennungskraftmaschine führenden Turbulenzkanälen (47-50), wobei die TurbuLenzkanäle im wesentlichen parallel zu den Ansaugrohren (23) verlaufen und durch Ober- und Unterschale bzw. Ober- und Unterteil (38, 37) des Gehäuses gebildet werden.

6. Integriertes Ansaugsystem nach dem vorherigen Anspruch, dadurch gekennzeichnet, daß ein Heißfilmluftmassenmesser (18) reinluftseitig in dem Gehäuse (10) integriert ist und im Bereich eines Saugrohrflansches Einspritzventile (24) sowie eine Kraftstoffleiste (25) integriert sind.

7. Integriertes Ansaugsystem nach einem der vorherigen Ansprüche, dadurch gekennzeichnet, daß eine Drosselklappe (19,51) in dem System angeordnet ist und sämtliche in dem System angeordneten Komponenten über einen einzigen Steckerleiste (22) elektrisch ansteuerbar sind und über diese Steckerleiste (22) Sensorsignale abgegriffen werden können.

## Claims

1. Integrated induction system, more especially for the combustion air of an internal combustion engine, comprising a plastics material housing (10), induction manifolds (23), an air filter (21) and electrical and/or mechanical components (18, 51), characterised in that the housing (10) is constructed in accordance with a multiple-shell-type technique and comprises at least one upper portion (38) and one lower portion (37), the parting plane between the upper and lower portions (38, 37) extending along the induction manifolds (23), and a cover (12) securing the air filter (21) on the upper portion (38), which air filter is disposed between the cover (12) and the upper portion (38), and said cover sealing the air chamber at the unfiltered air end.

2. Integrated induction system according to claim 1, characterised in that an additional intermediate housing (52) is disposed with the upper portion (38) of the housing in a composite system of the two-shell-type technique and forms a part of the air-circulating ducts.

3. Integrated induction system according to one of the preceding claims, characterised in that an oil separator (13) for the crankcase breathing is incorporated in the lower portion (37) of the housing.

4. Integrated induction system according to one of the preceding claims, characterised in that a resonance system is disposed in the housing (10) and comprises a resonance flap (36) and two air-circulating systems (34, 35), the resonance flap (36) connecting the two air-circulating systems (34, 35).

5. Integrated induction system according to one of the preceding claims, characterised in that a turbulence system is provided, comprising a turbulence accumulator (46) and tubulence ducts (47-50), which lead to the respective inlet valves of the internal combustion engine, the turbulence ducts extending substantially parallel to the induction manifolds (23) and being formed by an upper and lower shell, or respectively by an upper and lower portion (38, 37) of the housing.

6. Integrated induction system according to the preceding claim, characterised in that a hot-film air mass measurer (18) is incorporated in the housing (10) at the filtered air end, and injection valves (24) as well as a fuel bar (25) are incorporated in the region of an induction manifold flange.

7. Integrated induction system according to one of the preceding claims, characterised in that a throttle valve (19, 51) is disposed in the system, and all of the components disposed in the system are electrically actuatable via a single contact strip (22), and sensor signals can be picked-up via this contact strip (22).

## Revendications

1. Système d'aspiration intégré, en particulier pour l'air comburant d'un moteur à combustion interne consistant en un boîtier en matière plastique (10), un tuyau d'aspiration (23), un filtre à air (21) et des composants électriques et/ou mécaniques (18, 51),
caractérisé en ce que
le boîtier (10) est monté selon la technique à plusieurs coquilles et consiste en au moins une partie inférieure et une partie supérieure le long des tuyaux d'aspiration (23), et un couvercle (12) fixant sur la partie supérieure (38) le filtre à air (21) qui est disposé entre le couvercle (12) et la partie supérieure (38), en fermant la chambre d'air située du côté de l'air primaire.

2. Système d'aspiration intégré selon la revendication 1,
caractérisé en ce qu'
avec la partie supérieure (38) du boîtier, un autre boîtier intermédiaire (52) est disposé dans le système mixte de la technique à deux coquilles et forme une partie des canaux qui laissent passer l'air.

3. Système d'aspiration intégré selon l'une des revendications précédentes,
caractérisé en ce que
dans la partie inférieure (37) du boîtier est intégré un séparateur d'huile (13) pour la purge du carter du vilebrequin.

4. Système d'aspiration intégré selon l'une des revendications précédentes,
caractérisé en ce que
dans le boîtier (10) est intégré un système de résonance, consistant en un papillon de résonance (36) et deux systèmes de guidage d'air (34, 35), le papillon de résonance (36) reliant les deux systèmes de guidage d'air (34, 35).

5. Système d'aspiration intégré selon l'une des revendications précédentes,
caractérisé en ce qu'
on prévoit un système de turbulence consistant en un collecteur à turbulence (46) et en des canaux à turbulence (47-50) conduisant aux soupapes d'admission respectives du moteur à combustion interne, les canaux à turbulence s'étendant de façon sensiblement parallèle aux tuyaux d'aspiration (23) et étant formés par la coquille supérieure et la coquille inférieure, ou par la partie supérieure et la partie inférieure (38, 37) du boîtier.

6. Système d'aspiration intégré selon la revendication précédente,
caractérisé en ce qu'
un appareil de mesure de masse à film d'air chaud (18) est intégré du côté de l'air purifié dans le boîtier (10), et en ce que des injecteurs (24) et un rail à carburant (25) sont intégrés dans la zone d'une bride de tuyau d'aspiration.

7. Système d'aspiration intégré selon l'une des revendications précédentes,
caractérisé en ce qu'
un papillon d'étranglement (19, 51) est disposé dans le système, en ce que l'ensemble des composants disposés dans le système peut être commandé électriquement au moyen d'une barrette de connexion unique (22), et en ce que des signaux de détecteur peuvent être prélevés au moyen de cette barrette de connexion (22).
